# FASCICULE DE BREVET EUROPEEN

(11) **EP 3 196 494 B1**
(45) Date de publication et mention de la délivrance du brevet: **20.11.2019**
(21) Numéro de dépôt: 17150465.7
(22) Date de dépôt: 05.01.2017
(51) Int. Cl.: F16D 25/08

(54) **BUTEE D'EMBRAYAGE, NOTAMMENT POUR VEHICULE AUTOMOBILE**
KUPPLUNGSLAGER, INSBESONDERE FÜR KRAFTFAHRZEUG
CLUTCH ABUTMENT, IN PARTICULAR FOR A MOTOR VEHICLE

(30) Priorité: 25.01.2016 FR 1650546
(43) Date de publication de la demande: 26.07.2017
(73) Titulaire: Valeo Embrayages, 80009 Amiens Cedex 2 (FR)
(72) Inventeur: COMMEINE, Emmanuel, 80290 COURCELLES SOUS MOYENCOURT (FR)
(74) Mandataire: Vincent, Catherine Marie Marguerite

(56) Documents cités:
- EP-A2- 1 961 985
- DE-A1-102011 079 801
- DE-A1-102011 107 696
- DE-A1-102012 022 896

## Description

La présente invention concerne une butée d'embrayage, notamment pour véhicule automobile.

Un embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage. Le disque de friction est lié en rotation à un arbre d'entrée d'une boîte de vitesses et le plateau de réaction est par exemple solidaire en rotation d'un volant lié à l'arbre moteur, tel par exemple qu'un vilebrequin d'un moteur à combustion interne.

La butée d'embrayage est commandée par un actionneur piloté par un calculateur électronique afin d'exercer une force prédéterminée sur le diaphragme et de le déplacer sur une distance donnée.

Le plateau de pression est ainsi mobile entre une position d'embrayage dans laquelle le disque de friction est serré entre lesdits plateaux de pression et de réaction, et une position de débrayage dans laquelle le disque de friction est libéré.

Il est connu d'utiliser une butée d'embrayage comportant un corps tubulaire destiné à être traversé par l'arbre d'entrée de la boîte de vitesses, un actionneur comportant une partie mobile tubulaire, également appelée piston, engagée dans une chambre de pression annulaire du corps et mobile en translation parallèlement à l'axe du corps. Le piston de l'actionneur est destiné à l'actionnement d'un diaphragme d'embrayage, par l'intermédiaire d'un palier à billes par exemple. Le piston est ainsi mobile entre une position embrayée dans laquelle un couple moteur est transmis à l'arbre d'entrée de la boîte de vitesses, et une position débrayée dans laquelle aucun couple n'est transmis à cet arbre.

Une telle butée comporte ainsi un actionneur de type C.S.C. (Concentric Slave Cylinder, en anglais).

Une butée d'embrayage de ce type est notamment connue du document FR 2 786 837, au nom de la Demanderesse, et aussi du document EP1 961 985 A2.

Comme cela est connu du document FR 2 985 555, au nom de la Demanderesse, et du document EP 1 898 111, la butée d'embrayage peut être équipée d'une cible dont la position est représentative de la position de la partie mobile de l'actionneur, et d'un capteur apte à détecter la position de la cible. Le capteur est disposé radialement à l'extérieur de la cible et du corps.

La cible est par exemple un aimant situé dans un logement du piston. Afin de garantir le bon positionnement axial de l'aimant par rapport au capteur, il est nécessaire de coupler en rotation le piston et le corps. De tels moyens de couplage en rotation peuvent par exemple comporter une tige de guidage liée au corps ou respectivement au piston, engagée dans un logement de forme complémentaire du piston ou respectivement du corps, la tige étant apte à coulisser dans le logement. La tige est classiquement située à l'extérieur du piston et du corps, ce qui peut se révéler pénalisant en termes d'encombrement.

L'invention a notamment pour but d'apporter une solution simple, efficace et économique à ce problème.

A cet effet, elle propose une butée d'embrayage, notamment pour véhicule automobile, comportant un corps délimitant une chambre de pression annulaire, un piston annulaire monté coulissant dans ladite chambre, ledit piston étant destiné à actionner un diaphragme lors de son coulissement par rapport au corps, le piston étant équipé d'une cible dont la position selon l'axe du corps est apte à être détectée par un capteur de position, et des moyens de couplage en rotation du piston et du corps, caractérisée en ce que lesdits moyens de couplage en rotation comportent une bague comprenant au moins un premier organe de couplage en rotation coopérant avec un organe complémentaire du piston et au moins un second organe de couplage en rotation coopérant avec un organe complémentaire du corps. Par ailleurs, la bague comporte des moyens de fixation par encliquetage sur le corps. De tels moyens de fixation permettent un montage aisé de la bague sur le corps.

Une telle bague permet de coupler en rotation le piston et le corps de façon à garantir le bon positionnement angulaire de la cible par rapport au capteur de position, tout en limitant l'encombrement.

La bague peut comporter au moins un plot de couplage engagé dans une rainure axiale du piston, de manière à réaliser un couplage en rotation de la bague et du piston tout en autorisant le coulissement axial du piston par rapport à la bague.

La bague peut également comporter au moins un plot de couplage engagé dans un évidement de forme complémentaire du corps de manière à réaliser un couplage en rotation de la bague et du corps.

Le corps peut comporter une paroi annulaire radialement externe et une paroi annulaire radialement interne délimitant entre elles la chambre de pression annulaire dans laquelle est monté le piston.

La bague peut être couplée en rotation et fixée par encliquetage à la paroi interne du corps.

Dans ce cas, la bague peut comporter au moins un crochet élastique apte à venir s'encliqueter sur un rebord annulaire de la paroi interne du corps.

La cible peut être un aimant logé dans un évidement du piston.

La butée d'embrayage peut également comporter l'une ou plusieurs des caractéristiques suivantes :- le corps comporte au moins un orifice d'alimentation débouchant à une extrémité dans la chambre de pression et à une autre extrémité dans une gorge d'alimentation ménagée sur une surface externe du corps, des moyens d'étanchéité étant situés de part et d'autre de ladite gorge. La butée d'embrayage peut alors être associée à une partie d'un carter de boîte de vitesses dans laquelle est usiné un canal d'alimentation en fluide débouchant en regard de la gorge d'alimentation. Les moyens d'étanchéité permettent de confiner le fluide destiné à alimenter la chambre de pression et issu dudit canal d'alimentation dans la gorge d'alimentation, le fluide étant alors dirigé vers la chambre de pression au travers de l'orifice correspondant du corps de la butée d'embrayage,
- la chambre de pression et le piston sont annulaires,
- les moyens d'étanchéité comportent au moins deux joints toriques situés de part et d'autre de la gorge d'alimentation. Les joints toriques s'étendent ainsi de façon annulaire de chaque côté de la gorge d'alimentation, afin d'éviter que le fluide contenu dans ladite gorge d'alimentation ne s'échappe au niveau de l'interface entre le carter de boîte de vitesses et le corps,
- chaque joint torique est logé dans une gorge du corps,
- le corps est annulaire et comporte plusieurs orifices d'alimentation répartis sur une même circonférence et débouchant chacun dans la gorge d'alimentation et dans la chambre de pression. La gorge d'alimentation assure alors le rôle de collecteur de fluide en vue de le distribuer de façon uniforme au travers des différents orifices d'alimentation,
- le piston comporte une première extrémité montée dans la chambre de pression et une seconde extrémité équipée d'un palier, tel par exemple qu'une butée à billes, destiné à être intercalé axialement entre le diaphragme et le piston.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue éclatée, en perspective, d'une butée d'embrayage selon une forme de réalisation de l'invention,
- la figure 2 est une vue en coupe axiale de la butée d'embrayage,
- les figures 3 et 4 sont des vues en coupe axiale et en perspective de la butée d'embrayage,
- la figure 5 est une vue en perspective du corps,
- la figure 6 est une vue en perspective du piston,
- la figure 7 est une vue en perspective de la bague de couplage en rotation.

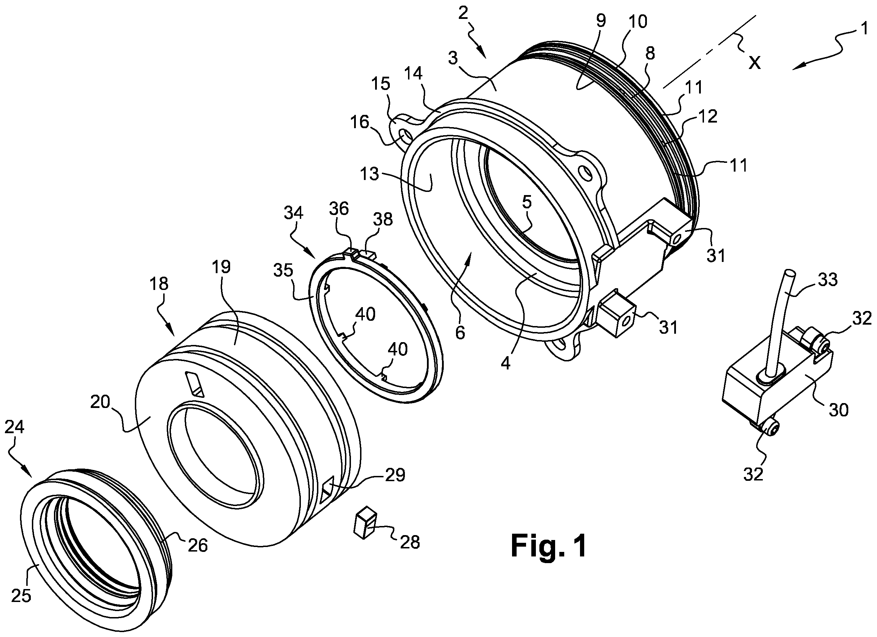

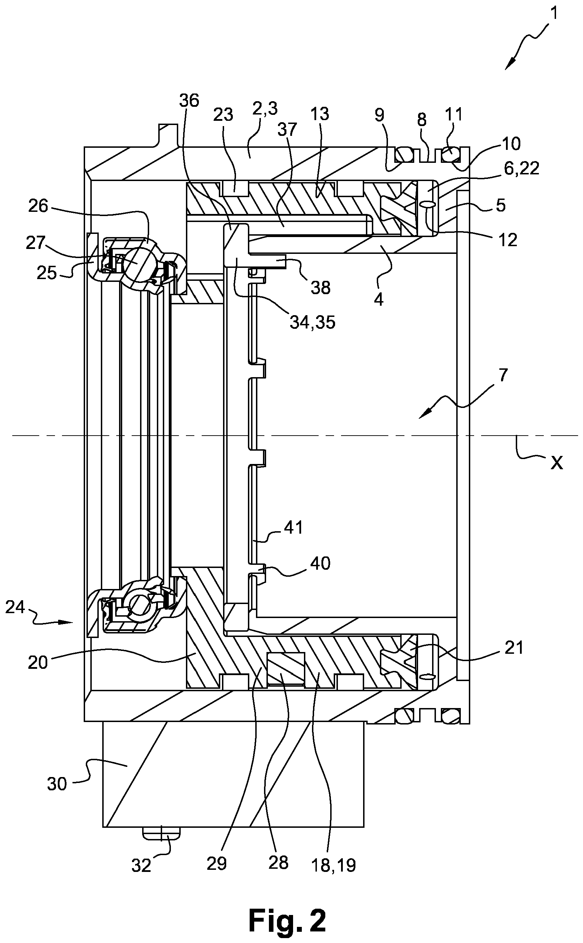

Les figures 1 à 7 illustrent une butée d'embrayage 1 pour véhicule automobile, selon une forme de réalisation de l'invention. La butée d'embrayage 1 comporte un corps cylindrique 2 comportant une paroi cylindrique radialement externe 3 et une paroi cylindrique radialement interne 4. Lesdites parois 3, 4 sont reliées à l'une de leurs extrémités par une cloison 5 s'étendant radialement. Lesdites parois 3, 4 et la cloison 5 délimitent un logement annulaire 6 ouvert vers l'avant, c'est-à-dire vers la gauche sur les figures.

La paroi interne 4 délimite intérieurement un passage 7 destiné à être traversé par un arbre d'entrée de la boîte de vitesses non représenté.

L'extrémité arrière de la paroi radialement externe 3 comporte trois gorges annulaires 8, 9, 10 écartées axialement les unes des autres, à savoir une gorge médiane 8 et des gorges avant 9 et arrière 10, situées respectivement de part et d'autre de la gorge médiane 8. Des joints toriques 11 en élastomère sont montés dans les gorges avant et arrière 9, 10.

Le corps 2 comporte des orifices d'alimentation 12 cylindriques, s'étendant radialement et débouchant dans le fond de la gorge médiane 8 et au niveau de la surface radialement interne 13 de la paroi externe 3. Les orifices 12 sont régulièrement répartis sur toute la périphérie.

La paroi externe 3 comporte en outre, à proximité de son extrémité avant, un rebord radial annulaire 14 à partir duquel des pattes 15 ou des lobes de fixation s'étendent radialement vers l'extérieur. Les pattes de fixation 15 comportent des trous 16 permettant l'engagement de vis de fixation destinées à assurer la fixation du corps à un carter de boîte de vitesses 17.

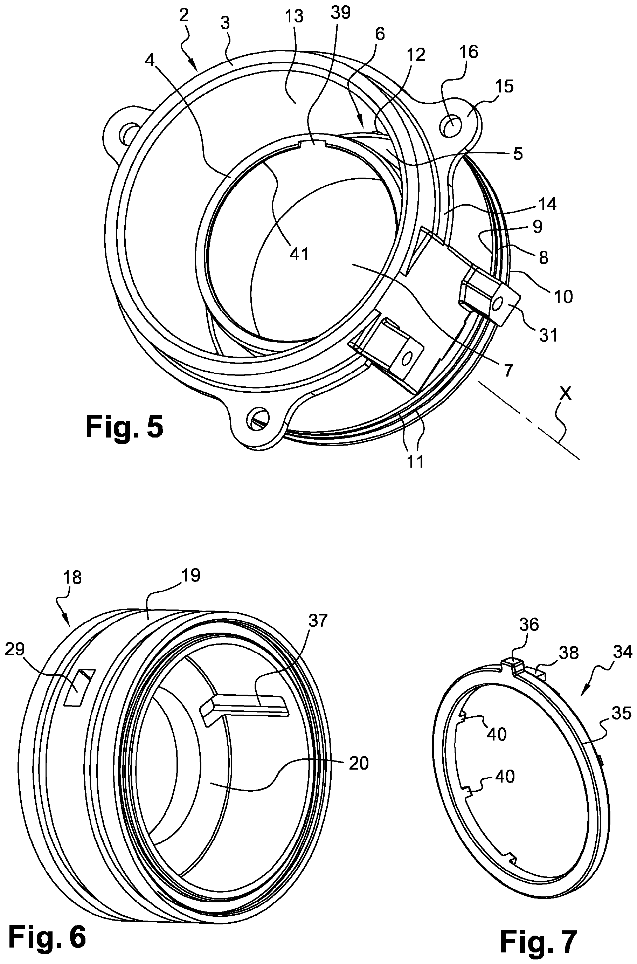

Un piston 18 est engagé dans le logement annulaire 6. Le piston 18 est annulaire et comporte une partie arrière 19 engagée dans ledit logement annulaire 6 et une partie avant 20 s'étendant radialement vers l'intérieur. L'extrémité arrière du piston 18 est pourvue de moyens d'étanchéité, tels par exemple qu'un joint à lèvre annulaire 21, destinés à fermer une chambre de pression 22 (figure 5) délimitée par les parois interne 4 et externe 3, la cloison 5 et l'extrémité arrière du piston 18.

Le piston 18 peut être équipé de moyens d'étanchéité au niveau de sa surface radialement externe, tels par exemple que des segments 23 venant en appui sur la surface interne 13 de la paroi externe 3 du corps 2.

Un palier de type butée 24 est monté à l'extrémité avant du piston 18. Ce palier 24 comporte une bague avant 25, destinée à être tournée du côté d'un diaphragme d'un mécanisme d'embrayage, une bague arrière 26 en appui sur la partie radiale avant 20 du piston 18 et des moyens de roulement, tels par exemple que des billes 27, situés entre les bagues avant et arrière 25, 26.

Le carter d'embrayage peut comporter un logement dans lequel est monté le corps 2 de la butée d'embrayage 1. Le carter d'embrayage comporte au moins un canal d'alimentation en fluide, tel par exemple que de l'huile, ledit canal débouchant radialement au niveau de la surface interne du logement, en regard de la gorge médiane 8 et axialement entre les joints toriques 11.

Le diamètre du débouché du canal d'alimentation au niveau de la surface correspondante est légèrement plus grand que la dimension axiale de la gorge médiane 8.

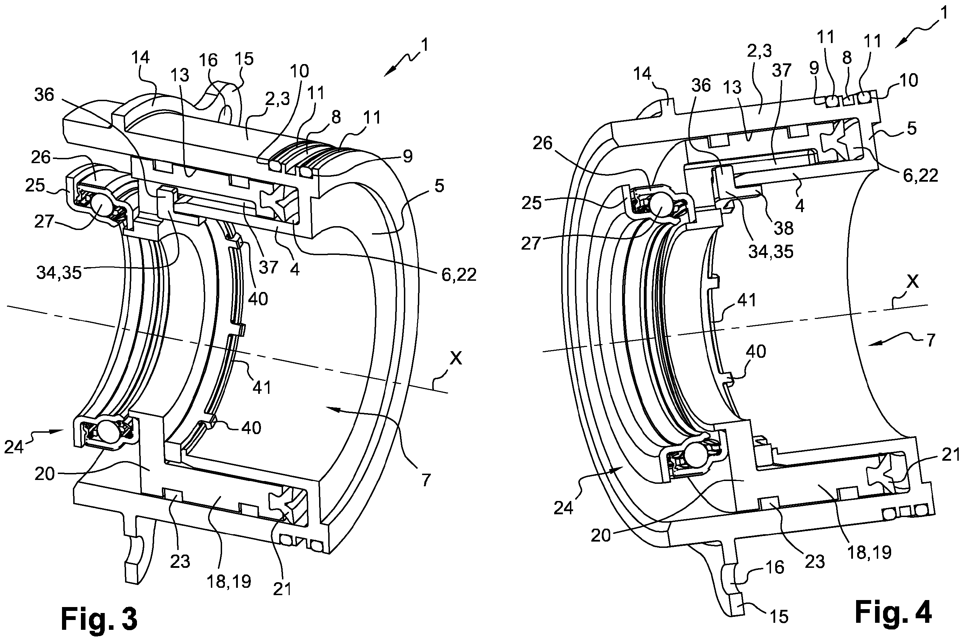

En fonctionnement, du fluide sous pression peut être amené dans la chambre de pression 22 au travers du canal du carter de boîte de vitesses, de la gorge médiane 8 et des orifices d'alimentation 12 du corps 2. Lorsque la pression dans la chambre de pression 22 est inférieure à une valeur déterminée, l'effort de rappel axial exercé par le diaphragme sur le palier 24 et sur le piston 18 est tel que le piston 18 se trouve dans sa position rétractée, illustrée à la figure 4. Dans cette position, le piston 18 est majoritairement situé dans le logement annulaire 6 du corps 2. Cette position correspond à une position débrayée du mécanisme d'embrayage.

A l'inverse, lorsque la pression exercée dans la chambre de pression 22 dépasse la valeur seuil, le piston 18 est déplacé vers l'avant, repoussant le palier 24 et provoquant l'actionnement du diaphragme. Cette position correspond à une position embrayée du mécanisme d'embrayage 1.

On obtient ainsi une liaison fluidique simple et efficace entre le canal d'alimentation du carter d'embrayage et la butée d'embrayage 24. La gorge 8 permet de distribuer de façon homogène le fluide au travers des différents orifices 12, dans la chambre de pression 22.

Afin de contrôler avec précision la position du piston 18, celui-ci est équipé d'une cible se présentant sous la forme d'un aimant 28, logé dans un évidement 29 de forme complémentaire débouchant au niveau de la surface externe du piston 18.

La position axiale de la cible 28, et donc du piston 18, peut être détectée à l'aide d'un capteur de position 30 fixé sur des zones 31 de la paroi externe 3 du corps 2 par l'intermédiaire de vis 32 (figure 1).

Ce capteur 30 est apte à détecter la position de la cible 28 le long de l'axe X du corps. Le capteur 30 est relié par un câble électrique 33 à des moyens de traitement, comme cela est connu en soi.

Un tel capteur 30 peut par exemple être de type à effet Hall, à courant de Foucault, PLCD (*Permanent magnetic Linear Contactless Displacement*) ou « fluxgate ».

Afin de garantir la position angulaire du piston 18, et en particulier de la cible 28, par rapport au corps 2 et au capteur 30, il est nécessaire d'indexer la position angulaire du piston 18 par rapport au corps 2 tout en autorisant son coulissement axial par rapport au corps 2.

Pour cela, la butée d'embrayage 1 comporte une bague de couplage 34, réalisée par exemple en matériau plastique et comportant une partie annulaire 35 à partir de laquelle un premier plot de couplage 36 s'étend radialement vers l'extérieur, le premier plot 36 étant engagé dans une rainure 37 ménagée à la périphérie radialement interne du piston 18 et s'étendant axialement. Le plot 36 et la rainure 37 permettent ainsi de coupler en rotation la bague 34 et le piston 18.

La bague de couplage 34 comporte en outre un second plot 38 s'étendant axialement depuis la partie annulaire 35, engagé dans une encoche 39 de forme complémentaire (figure 5) ménagée dans la paroi interne 4 du corps 2, de manière à réaliser un couplage en rotation de la bague 34 et du corps 2.

De cette manière, on garantit la position angulaire du piston 18, et donc de la cible 28, par rapport au corps 2, et donc par rapport au capteur correspondant 30.

La bague 34 comporte en outre des crochets d'encliquetage 40, régulièrement répartis sur toute la circonférence et aptes à venir s'encliqueter sur un rebord radial annulaire 41 formé à l'extrémité avant de la paroi interne du corps. L'encoche 39 est formée dans le rebord 41.

Les dimensions d'une telle butée d'embrayage 1 sont réduites. Par ailleurs, le montage d'une telle butée d'embrayage 1 peut être réalisé simplement, de la manière suivante.

On engage tout d'abord la bague de couplage 34 à l'intérieur du piston 18, de façon à ce que le premier plot 36 soit engagé dans la rainure 37 du piston 18. On engage ensuite l'ensemble formé par le piston 18 et la bague de couplage 34 dans le corps 2, puis on fixe la bague 34 sur le corps 2 par encliquetage.

## Revendications

1. Butée d'embrayage (1), notamment pour véhicule automobile, comportant un corps (2) délimitant une chambre de pression annulaire (22), un piston annulaire (18) monté coulissant dans ladite chambre (22), ledit piston (18) étant destiné à actionner un diaphragme lors de son coulissement par rapport au corps (2), le piston (18) étant équipé d'une cible (28) dont la position selon l'axe (X) du corps (2) est apte à être détectée par un capteur de position (30), et des moyens de couplage en rotation (34) du piston (18) et du corps (2), lesdits moyens de couplage en rotation comportant une bague (34) comprenant au moins un premier organe de couplage en rotation (36) coopérant avec un organe complémentaire (37) du piston (18) et au moins un second organe de couplage en rotation (38) coopérant avec un organe complémentaire (39) du corps (2), **caractérisée en ce que** la bague (34) comporte des moyens de fixation par encliquetage (40) sur le corps (2).

2. Butée d'embrayage (1) selon la revendication 1, **caractérisée** en ce la bague (34) comporte au moins un plot de couplage (36) engagé dans une rainure axiale (37) du piston (18), de manière à réaliser un couplage en rotation de la bague (34) et du piston (18) tout en autorisant le coulissement axial du piston (18) par rapport à la bague (34).

3. Butée d'embrayage (1) selon la revendication 1 ou 2, **caractérisée en ce que** la bague (34) comporte au moins un plot de couplage (38) engagé dans un évidement (39) de forme complémentaire du corps (2) de manière à réaliser un couplage en rotation de la bague (34) et du corps (2).

4. Butée d'embrayage (1) selon l'une des revendications 1 à 3, **caractérisée en ce que** le corps (2) comporte une paroi annulaire radialement externe (3) et une paroi annulaire radialement interne (4) délimitant entre elles la chambre de pression annulaire (22) dans laquelle est monté le piston (18).

5. Butée d'embrayage (1) selon les revendications 1 à 4, **caractérisée en ce que** la bague (34) est couplée en rotation et fixée par encliquetage à la paroi interne (4) du corps (2).

6. Butée d'embrayage (1) selon la revendication 5, **caractérisée en ce que** la bague (34) comporte au moins un crochet élastique (40) apte à venir s'encliqueter sur un rebord annulaire (41) de la paroi interne (4) du corps (2).

7. Butée d'embrayage (1) selon l'une des revendications 1 à 6, **caractérisée en ce que** la cible est un aimant (28) logé dans un évidement (29) du piston (18).

8. Butée d'embrayage (1) selon l'une des revendications 1 à 7, **caractérisée en ce que** le capteur de position (30) est fixé au corps (2).

## Patentansprüche

1. Kupplungslager (1), insbesondere für Kraftfahrzeug, umfassend einen eine ringförmige Druckkammer (22) begrenzenden Körper (2), einen in der Kammer (22) gleitend montierten ringförmigen Kolben (18), wobei der Kolben (18) zum Betätigen einer Membran bei seinem Gleiten im Verhältnis zum Körper (2), wobei der Kolben (18) mit einem Ziel (28) ausgerüstet ist, dessen Position gemäß der Achse (X) des Körpers (2) geeignet ist, von einem Positionssensor (30) detektiert zu sein, und Kopplungsmittel in Rotation (34) des Kolbens (18) und des Körpers (2) umfasst, wobei die Kopplungsmittel in Rotation einen Ring (34) umfassen, umfassend wenigstens ein erstes Kopplungsorgan in Rotation (36), das mit einem komplementären Organ (37) des Kolbens (18) und wenigstens einem zweiten Kopplungsorgan in Rotation (38) zusammenwirkt, das mit einem komplementären Organ (39) des Körpers (2) zusammenwirkt, **dadurch gekennzeichnet, dass** der Ring (34) Befestigungsmittel per Einrasten (40) auf dem Körper (2) umfasst.

2. Kupplungslager (1) nach Anspruch 1, **dadurch gekennzeichnet, dass** der Ring (34) wenigstens einen Kopplungsklotz (36) umfasst, der in einer axialen Rille (37) des Kolbens (18) derart eingegriffen ist, dass eine Kopplung in Rotation des Rings (34) und des Kolbens (18) bei gleichzeitigem Zulassen des axialen Gleitens des Kolbens (18) im Verhältnis zum Ring (34) realisiert ist.

3. Kupplungslager (1) nach Anspruch 1 oder 2, **dadurch gekennzeichnet, dass** der Ring (34) wenigstens einen Kopplungsklotz (38) umfasst, der in eine Ausnehmung (39) in komplementärer Form des Körpers (2) derart eingreift, dass eine Kopplung in Rotation des Rings (34) und des Körpers (2) realisiert ist.

4. Kupplungslager (1) nach einem der Ansprüche 1 bis 3, **dadurch gekennzeichnet, dass** der Körper (2) eine ringförmige radial äußere Wand (3) und eine ringförmige radial innere Wand (4) umfasst, die untereinander die ringförmige Druckkammer (22) begrenzen, in der der Kolben (18) montiert ist.

5. Kupplungslager (1) nach Anspruch 1 bis 4, **dadurch gekennzeichnet, dass** der Ring (34) in Rotation gekoppelt und per Einrasten an der inneren Wand (4) des Körpers (2) befestigt ist.

6. Kupplungslager (1) nach Anspruch 5, **dadurch gekennzeichnet, dass** der Ring (34) wenigstens einen elastischen Haken (40) umfasst, der geeignet ist, auf einem ringförmigen Rand (41) der inneren Wand (4) des Körpers (2) einzurasten.

7. Kupplungslager (1) nach einem der Ansprüche 1 bis 6, **dadurch gekennzeichnet, dass** das Ziel ein Magnet (28) ist, der in einer Ausnehmung (29) des Kolbens (18) aufgenommen ist.

8. Kupplungslager (1) nach einem der Ansprüche 1 bis 7, **dadurch gekennzeichnet, dass** der Positionssensor (30) am Körper (2) befestigt ist.

## Claims

1. Clutch thrust bearing (1), in particular for a motor vehicle, comprising a body (2) delimiting an annular pressure chamber (22), an annular piston (18) mounted so as to be able to slide in said chamber (22), said piston (18) being designed to actuate a diaphragm when sliding with respect to the body (2), the piston (18) being equipped with a target (28) whose position along the axis (X) of the body (2) is able to be detected by a position sensor (30), and means (34) for coupling the piston (18) and the body (2) in rotation,
said rotational coupling means comprising a ring (34) comprising at least one first rotational coupling member (36) that cooperates with a complementary member (37) of the piston (18) and at least one second rotational coupling member (38) that cooperates with a complementary member (39) of the body (2), **characterized in that** the ring (34) comprises means (40) for securing by snap-fitting onto the body (2).

2. Clutch thrust bearing (1) according to Claim 1, **characterized in that** the ring (34) comprises at least one coupling tab (36) engaged in an axial groove (37) of the piston (18), so as to couple the ring (34) and the piston (18) in rotation while allowing the piston (18) to slide axially with respect to the ring (34).

3. Clutch thrust bearing (1) according to Claim 1 or 2, **characterized in that** the ring (34) comprises at least one coupling tab (38) engaged in a complementarily-shaped cutout (39) of the body (2) so as to couple the ring (34) and the body (2) in rotation.

4. Clutch thrust bearing (1) according to one of Claims 1 to 3, **characterized in that** the body (2) comprises an annular radially outer wall (3) and an annular radially inner wall (4) that define between them the annular pressure chamber (22) in which the piston (18) is mounted.

5. Clutch thrust bearing (1) according to one of Claims 1 to 4, **characterized in that** the ring (34) is coupled in rotation with, and secured by snap fitting to, the inner wall (4) of the body (2).

6. Clutch thrust bearing (1) according to Claim 5, **characterized in that** the ring (34) comprises at least one elastic hook (40) that is able to snap-fit onto an annular rim (41) of the inner wall (4) of the body (2).

7. Clutch thrust bearing (1) according to one of Claims 1 to 6, **characterized in that** the target is a magnet (28) housed in a cutout (29) of the piston (18).

8. Clutch thrust bearing (1) according to one of Claims 1 to 7, **characterized in that** the position sensor (30) is secured to the body (2).
